# EUROPEAN PATENT APPLICATION

(11) **EP 4 546 752 A1**
(43) Date of publication of application: **30.04.2025**
(21) Application number: 23827567.1
(22) Date of filing: 23.06.2023
(51) Int. Cl.: H04L 61/5092, G06K 19/06, H04L 67/125, H04L 101/681

(54) **APPARATUS FOR MAPPING SENSOR ADDRESSES AND DRIVING METHOD OF APPARATUS**

(30) Priority: 24.06.2022 KR 20220077208
(71) Applicant: SunHst Co.,Ltd., Ulsan 44495 (KR)
(72) Inventor: LEE, Jin Yong, Ulsan 44409 (KR)
(74) Representative: Cabinet Chaillot
(86) International application number: PCT/KR2023/008780
(87) International publication number: WO 2023/249459

(57) **Abstract**

The present invention relates to an apparatus for mapping sensor addresses and a driving method of the apparatus. The apparatus for mapping sensor addresses, according to embodiments of the present invention, may comprise: a wireless sensor that monitors the operation or surrounding conditions of industrial equipment; a display unit that displays a settings screen for mapping a wireless control apparatus that controls the wireless sensor; and a control unit that receives, from the displayed settings screen, starting address information about the wireless sensor set for each wireless control apparatus, and automatically maps the starting address information and the wireless sensor to each other by scanning a code of the wireless sensor when identification information about the wireless sensor is matched to the received starting address information.

## Description

### [Technical Field]

The present invention relates to a sensor address mapping device and a method of operating the same, and more specifically, to a sensor address mapping device in which a programmable logic controller (PLC) performs remote control and monitoring according to a user address setting using a mobile terminal, for example, at an industrial site where a sensor monitoring device such as a PLC is used, and a method of operating the same.

### [Background Art]

Sensors are parts, devices, or measuring instruments that detect, distinguish, and measure physical quantities or changes of the physical quantities such as heat, light, temperature, pressure, and sound, and provide the physical quantities as certain signals. Sensors have a wide range of applications including detecting motion, responding to sound, and responding to pressing force. Types of sensors include temperature sensors, pressure sensors, flow sensors, magnetic sensors, light sensors, acoustic sensors, taste sensors, and olfactory sensors. Examples of simple sensors include a pass card that pops up when a vehicle enters a highway, a fire detector in a classroom, an automatic flashing light in a hallway, or a streetlight that turns on when it gets dark.

However, in conventional wired sensor measurement systems, when vibration measurement is required in a place in which cable installation is not possible, measurement is impossible, or there are various problems in devising various other methods. In addition, when it is impossible to install a cable of a wired vibration sensor, a method using a wireless measurement system may be applied, but since wireless vibration sensors are expensive, there is a problem in initial purchase costs.

For various reasons, there are many cases in which sensors are connected using wires and used at existing industrial sites, but such a method may cause safety incidents due to the complex environment, and thus an efficient wireless method is required to solve such a problem.

### [Related Art Documents]

### [Patent Documents]

(Patent Document 1) Korean Patent Registration No. 10-1783132 (2017.09.22)
(Patent Document 2) Korean Patent Registration No. 10-1143343 (April 30, 2012)
(Patent Document 3) Korean Patent Registration No. 10-1652461 (August 24, 2016)
(Patent Document 4) Korean Patent Registration No. 10-1098042 (December 16, 2011)
(Patent Document 5) Korean Patent Publication No. 10-2019-0111359 (October 2, 2019)
(Patent Document 6) Korean Patent Publication No. 10-2021-0084094 (July 7, 2021)
(Patent Document 7) Korean Patent Publication No. 10-2022-0007939 (January 20, 2022)

### [Disclosure]

### [Technical Problem]

An embodiment of the present invention is directed to providing a sensor address mapping device in which a programmable logic controller (PLC) performs remote control and monitoring according to a user address setting using a mobile terminal, for example, at an industrial site where a sensor monitoring device such as a PLC is used, and a method of operating the same.

### [Technical Solution]

A sensor address mapping device according to an embodiment of the present invention includes a display unit which displays a setting screen for mapping a wireless sensor configured to monitor an operation or a surrounding condition of industrial equipment to a wireless control device configured to control the wireless sensor, and a control unit which receives start address information of the wireless sensor set for each wireless control device on the displayed setting screen and automatically maps the start address information and the wireless sensor by scanning a code of the wireless sensor when identification information of the wireless sensor is matched to the received start address information.

The control unit may display a first setting window for setting the wireless control device on the display unit and may display a second setting window for setting a start address of the wireless sensor matched to the wireless control device selected on the first setting window.

The control unit may display a first item in which a number of a start address is preset when the second setting window is displayed on the display unit, and a second item that allows an address to start with information desired by a user.

The control unit may operate to allow the user to directly input a number or text of a start address in the second item.

The control unit may provide automatically mapped mapping data to an external device configured to remotely monitor the wireless sensor so that monitoring is performed based on the provided mapping data.

The sensor address mapping device may include a mobile-based terminal device including a smartphone or a tablet personal computer (PC).

In addition, a method of driving a sensor address mapping device according to an embodiment of the present invention includes displaying, by a display unit, a setting screen for mapping a wireless sensor configured to monitor an operation or a surrounding condition of industrial equipment to a wireless control device configured to control the wireless sensor, and receiving, by a control unit, start address information of the wireless sensor set for each wireless control device on the displayed setting screen and automatically mapping the start address information and the wireless sensor by scanning a code of the wireless sensor when identification information of the wireless sensor is matched to the received start address information.

### [Advantageous Effects]

According to embodiments of the present invention, a manager who manages industrial automation equipment or the like can easily connect a desired sensor to a desired address by scanning a sensor QR code of a sensor that monitors the operation of the industrial automation equipment.

In addition, according to embodiments of the present invention, the connected sensor is used to connect a sensor to a sensor monitoring device such as a PLC in wireless communication, thereby controlling and monitoring industrial automation equipment in real time through short-range wireless communication.

### [Description of Drawings]

FIG. 1 is a diagram illustrating a sensor address mapping system according to an embodiment of the present invention.
FIGS. 2 to 6 are diagrams for describing a sensor address mapping process.
FIG. 7 is a flowchart illustrating a sensor address mapping process according to an embodiment of the present invention.
FIG. 8 is a flowchart illustrating an operation process of a manager terminal device of FIG. 1.
FIG. 9 is a block diagram illustrating a detailed structure of a sensor address mapping device according to an embodiment of the present invention.
FIG. 10 is a flowchart illustrating a process of driving the sensor address mapping device of FIG. 9.

### [Modes of the Invention]

Hereinafter, embodiments of the present invention will be described in detail with reference to the accompanying drawings.

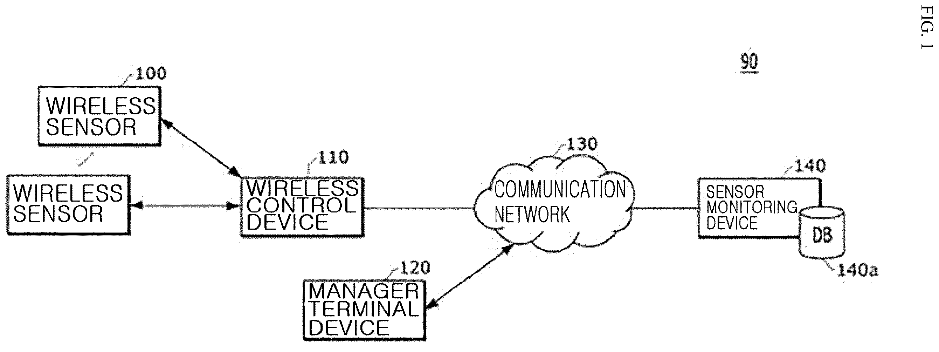

FIG. 1 is a diagram illustrating a sensor address mapping system according to an embodiment of the present invention.

As shown in FIG. 1, a sensor address mapping system 90 according to an embodiment of the present invention includes some or all of a wireless sensor 100, a wireless control device 110, a manager terminal device 120, a communication network 130, and a sensor monitoring device 140.

Here, the expression "including some or all" means that some components such as the communication network 130 are omitted so that the wireless control device 110 and the sensor monitoring device 140 may perform direct communication (for example, peer to peer (P2P) communication), or some or all components constituting the sensor monitoring device 140 may be integrated into a network device (for example, a wireless switching device) constituting the communication network 130. In order to provide a thorough understanding of the present invention, the case in which all are included will be described.

The wireless sensor 100 may be installed in or connected to any device such as a heater, a cooler, a motor, a fan, a compressor, a pump, or industrial automation equipment to provide various types of sensing data related to an operating state or the like of a corresponding device (for example, heat, vibration, noise, or temperature) or may be installed in any space to detect humidity, ozone concentration, whether corona is generated, or the like to provide sensing data accordingly. Of course, corona generation due to electric discharge needs to be monitored because the corona generation causes accidents. In addition, the wireless sensor 100 according to the embodiment of the present invention may include industrial wireless sensors such as a magnetic field detection sensor, a limit sensor, and a proximity sensor. Since there are tens to tens of thousands of wireless sensors 100 in use in the marketplace, the embodiment of the present invention is not particularly limited to any one type.

The wireless sensor 100 is provided in the form of a wireless sensor module. A module may be a set of parts and may include, for example, a sensor, a central processing unit (CPU) or a microprocessor unit (MPU), a battery unit, and a wireless communication unit on a printed circuit board (PCB). Of course, the sensor senses external physical states or the like and outputs sensing signals. A sensor control unit of the CPU or MPU may perform an operation of receiving a sensing signal or sensing data from the sensor and converting the sensing signal or sensing data into digital signals. The battery unit provides a power voltage Vcc for the operations of the CPU, the MPU, the sensor, and the wireless communication unit. As the power voltage, a DC voltage may be used. The wireless communication unit transmits a sensing signal, which is obtained by converting sensing data or an analog signal of the sensor into a digital signal, to the wireless control device 110, which controls a plurality of wireless sensors 100, under the control of the sensor control unit.

The wireless sensor 100 may include a short-range communication module as a wireless communication unit, and the communication module may adopt various communication methods for short-range communication such as Bluetooth, Zigbee, Wi-Fi, or infrared communication. As short-range communication, Bluetooth communication enabling one-way or two-way communication may be preferable. The principle of Bluetooth low energy (BLE) is applied to a beacon. BLE is Bluetooth low energy and is a technology of Bluetooth 4.0 or more. As a radio communication device, a beacon transmitter periodically transmits signals. Since the beacon transmitter according to an embodiment of the present invention may perform one-way communication as well as two-way communication, the embodiment of the present invention is not particularly limited to any one method.

The wireless sensor 100 may internally measure a battery state. For example, when a measured value is a reference value or less, the wireless sensor 100 provides a state value related to the battery state to the wireless control device 110. The sensor control unit of the CPU or MPU measures a sensor battery level and determines, for example, whether the sensor battery level decreases to a certain voltage or less. That is, in sensor battery measurement, a voltage supplied to a corresponding MCU through an MPU or the like attached to or mounted on a sensor is measured, thereby checking a current battery state of the sensor. The sensor control unit may include a battery measurement unit but may operate in conjunction with a battery measurement unit provided as a peripheral circuit separately from the sensor control unit. As a voltage increases, a current increases, and since an increase in current means that the number of charges passing through a cross-sectional area per unit time increases, accordingly, a sensor battery level may be measured based on measurement of the voltage. That is, this is because a level of a battery is an amount of charges. For example, the wireless sensor 100, more precisely, the sensor control unit, may constitute a resistor having a specified value between a connection line connected to the battery unit, and for example, a ground GND, and may sense a voltage across two terminals of the resistor, thereby measuring a level of a battery.

The wireless control device 110 communicates with the plurality of wireless sensors 100 and also operates as a communication receiver that controls the plurality of wireless sensors 100 in an any area. According to an embodiment of the present invention, the plurality of wireless control devices 110, that is, N wireless controllers, may be constructed and used. In this case, each wireless control device 110 may receive sensing data from wireless sensors 100 of different groups to transmit the sensing data to the sensor monitoring device 140 of FIG. 1. The number of wireless sensors 100 controlled by each wireless control device 110 may be limited to about 128 to ensure smooth communication. Of course, since the number of wireless sensors 100 is related to the performance of the wireless control device 110, the number is not particularly limited.

When the sensor address mapping system (or the wireless sensor battery alarm system) 90 of FIG. 1 according to the embodiment of the present invention is constructed, the wireless control device 110 may prestore a list of the wireless sensors 100 capable of communicating in a memory such as a hardware random access memory (RAM) or a software registry. Accordingly, based on the stored list, the wireless control device 110 communicates with the wireless sensor 100, which corresponds to a control area thereof, and provides sensing data. For example, the wireless sensor 100 transmits a state value related to a battery state thereof when a battery state is a reference value or less. In this case, the wireless sensor 100 also transmits device identification (ID) information. Accordingly, the wireless control device 110 may process received sensing data when corresponding ID information matches ID information in the prestored list.

The wireless control device 110 according to the embodiment of the present invention stores data provided when a system is constructed or when address information of a sensor set by the manager terminal device 120 is changed and operates based on the stored data. For example, the wireless control device 110 operates based on data received from the sensor monitoring device 140, and of course, the received data relates to matching data or mapping data in which each wireless control device 110 is matched to the plurality of wireless sensors 100. For example, a representative example is that a first wireless controller matches ID information of wireless sensors 1 to 128 to control wireless sensors 1 to 128. Therefore, the wireless control device 110 maps data received from the sensor monitoring device 140 and data received from the wireless sensor 100 and then provides a result thereof to the sensor monitoring device 140. Here, mapping may mean applying currently received data of the wireless sensor 100 to existing matching data.

For example, the wireless control device 110 may receive sensing data, operation data related to a battery state, or the like from the wireless sensors 100 that are not controlled by the wireless control device 110. Of course, the wireless sensor 100 may perform one-way communication such as transmitting a beacon signal or the like as described above and may periodically transmit sensing data as well as ID information thereof. Accordingly, when the wireless control device 110 receives a corresponding signal, the wireless control device 110 may perform a mapping operation to compare the received signal with the prestored list to determine whether a wireless sensor 100 is under the control of the wireless control device 110. That is, prestored data is compared with currently received data. For example, the wireless control device 110 may perform an operation of retrieving and comparing ID information of the wireless sensors 100 stored in one area of a memory and may also perform an operation of comparing the retrieved ID information with ID information of the wireless sensors 100 stored in another area. Such an operation may be mapping.

The manager terminal device 120 operates as a sensor address mapping device according to an embodiment of the present invention. The manager terminal device 120 performs an operation of matching or mapping the wireless sensors 100 to the wireless control devices 110 controlling the wireless sensors 100 when constructing the sensor address mapping system 90 of FIG. 1. Of course, the manager terminal device 120 sets data such that the wireless sensor 100 and the wireless control device 110 operate according to a user address setting. A user of the manager terminal device 120 executes a program for connecting a sensor in wireless communication to a PLC, that is, the sensor monitoring device 140 of FIG. 1, and then matches or maps the plurality of wireless sensors 100 for each wireless controller. Such an operation may also be referred to as mapping in that it involves making a connection map between each wireless controller and the plurality of wireless sensors 100. A manager may access a sensor mapping setting page in a manager mode to set a start address for each controller, and in such a process, sensor data of the wireless sensor 100 is added. Then, a QR code containing a sensor ID value of the wireless sensor 100 is scanned to generate sensor mapping data containing the sensor ID value. The generated mapping data is transmitted to the sensor monitoring device 140 of FIG. 1 to allow corresponding data to be transmitted from the sensor monitoring device 140 to each wireless control device 110.

The manager terminal device 120 may include a smartphone, a tablet personal computer (PC), or even a wearable device worn on a manager's wrist or the like. Of course, the manager terminal device 120 may include a web-based terminal device such as a desktop PC or a laptop computer in addition to a mobile-based terminal device above. Of course, since a sensor address setting operation performed by the manager terminal device 120 may also be performed by a computer of a manager or the like which manages a service operation of the sensor monitoring device 140 of FIG. 1, the embodiment of the present invention is not particularly limited to any one device for the sensor address setting operation. Accordingly, even the sensor monitoring device 140 of FIG. 1 may operate as an address setting mapping device.

The manager terminal device 120 according to the embodiment of the present invention may also operate as a terminal for checking an operating state such as a remaining battery level of the wireless sensor 100 in addition to the sensor address mapping operation. For example, as described above, the wireless sensors 100 measure a battery state thereof and transmit sensing data, which is related to an operating state such as a remaining battery level, to the wireless control device 110 when the remaining battery level is lower than a reference value or when an existing voltage is lower than an operating voltage, and the corresponding sensing data is provided to the sensor monitoring device 140. Accordingly, the sensor monitoring device 140 notifies the manager terminal device 120 of a manager, who manages the wireless sensor 100, of such a fact, thereby enabling management. Accordingly, the wireless sensor 100 may be repaired or replaced.

The communication network 130 includes both wired and wireless communication networks. For example, a wired or wireless Internet network may be used or connected to the communication network 130. Here, the wired network includes an Internet network such as a cable network or a public switched telephone network (PSTN), and the wireless communication network includes code division multiple access (CDMA), wideband code division multiple access (WCDMA), Global System/Standard for Mobile Communication (GSM), evolved packet core (EPC), Long Term Evolution (LTE), or a Wireless Broadband Internet (Wibro) network. Of course, the communication network 130 according to the embodiment of the present invention is not limited thereto and may be used as an access network of a next-generation mobile communication system to be implemented in the future, for example, a cloud computing network under a cloud computing environment, a 5G network, or the like. For example, when the communication network 130 is a wired communication network, an access point within the communication network may be connected to an exchange of a telephone office or the like, but when the communication network 130 is a wireless communication network, the communication network 130 may be connected to a Serving GPRS Support Node (SGSN) or Gateway GPRS Support Node (GGSN) operated by a communication company to process data or may be connected to various relays such as a base transceiver station (BTS), NodeB, or e-NodeB to process data.

The communication network 130 may also include an access point. The access point includes a small base station such as a femto or pico base station which is widely installed inside buildings. Here, according to classification of small base stations, the femto or pico base station is classified according to how many wireless control devices 110 or manager terminal devices 120 may be connected thereto. Of course, the access point includes a short-range communication module for performing short-range communication such as Zigbee and Wi-Fi with the wireless control device 110 or the manager terminal device 120. The access point may use a transmission control protocol/Internet protocol (TCP/IP), a real-time streaming protocol (RTSP), or the like for wireless communication. Here, the short-range communication may be performed through various specifications such as Bluetooth, Zigbee, Infrared Data Association (IrDA), radio frequency (RF) communication such as ultra-high frequency (UHF) or very high frequency (VHF) communication, and ultra-wideband communication (UWB) in addition to Wi-Fi. Accordingly, the access point may extract a position of a data packet, may designate an optimal communication path for the extracted position, and may transmit the data packet to a next device, for example, the sensor monitoring device 140, along the designated communication path. The access point may share a plurality of lines in a typical network environment and may include, for example, a router, a repeater, and a relay.

The sensor monitoring device 140 may include, for example, a server and may operate as a sensor address mapping device according to an embodiment of the present invention. For example, when the manager terminal device 120 of FIG. 1 is a mobile-based terminal device possessed by a manager, the sensor monitoring device 140 may include a server, an electronic display or a computer of a manager connected to the server for the manager to monitor the operation of the wireless sensor 100, and the like. These devices may operate as a sensor address mapping device in addition to the above-described mobile-based terminal device.

After data construction is completed, the sensor monitoring device 140 manages an operating state of the wireless sensors 100 installed in any space or any equipment. To this end, based on ID information of the wireless control device 110, the sensor monitoring device 140 manages the plurality of wireless sensors 100 controlled by each wireless control device 110. That is, a first wireless control device, which is controller 1, may control sensors 1 to 128, and a second wireless control device, which is controller 2, may manage an operating state of sensors 129 to 257. Of course, each wireless sensor 100 has device ID information, but in the embodiment of the present invention, since it is also possible for the manager terminal device 120 or the sensor monitoring device 140 to separately assign a number to manage each wireless sensor 100, the embodiment of the present invention is not particularly limited to any one form.

When a state value is transmitted from controller 1 to have the wireless sensor 100 assigned, for example, number 50, to indicate that a remaining battery level is insufficient, the sensor monitoring device 140 may classify and store the state value in a database (DB) 140a of FIG. 1. The sensor monitoring device 140 may notify the manager terminal device 120 of such a fact. In such a process, the sensor monitoring device 140 transmits an error alarm to the manager terminal device 120, adds the error alarm to an error alarm history, and provides a sensor monitor page when a manager clicks a battery alarm in the error alarm history. Here, in an alarm notification process, various forms of notification are possible. Rather than notifying of an error when an error occurs in each wireless sensor 100, that is, whenever a battery is low, by periodically notifying through an alarm at a certain time interval, the number of times a manager is notified of an alarm is reduced, thereby increasing monitoring efficiency.

Above all, in order to further increase the monitoring efficiency of the wireless sensors 100, the sensor monitoring device 140 may further determine an effect on a low battery by further determining an additional state such as an error occurrence frequency or an operating state of the wireless sensors 100. For example, when an error occurrence frequency is high, it is possible to request replacement of the wireless sensor 100. In addition, when the wireless sensor 100 is severely overheated or is an old model, a battery may be quickly discharged due to product degradation. Accordingly, the sensor monitoring device 140 applies an artificial intelligence program, collects data related to the operation or low battery of the wireless sensor 100, generates big data, and applies a deep learning operation of the artificial intelligence program to the big data to proactively respond to a low battery or a failure of the wireless sensor 100, thereby preventing malfunctions and safety incidents of workers due to battery discharge in an environment in which the wireless sensor 100 is used. For example, when the wireless sensor 100 of a specific manufacturer is heated, the sensor monitoring device 140 may check a name of the manufacturer based on current data learning results. When there is a failure history in the wireless sensor 100 of the manufacturer, the failure history may be provided to the manager terminal device 120 to enable prompt replacement.

Meanwhile, the sensor monitoring device 140 may appropriately respond even when the wireless control device 110 operates abnormally. For example, the sensor monitoring device 140 determines whether data of the wireless sensor 100 is received from a designated wireless control device 110. Of course, when there is no sensor having a low battery among the wireless sensors 100 controlled by a specific wireless control device 110, the sensor monitoring device 140 may not receive data for a specified time. Accordingly, the sensor monitoring device 140 learns such an operating state. Based on results of the learning, the sensor monitoring device 140 may determine whether the wireless control device 110 is abnormal through an operating pattern of the wireless sensor 100 controlled by the specific wireless control device 110. In addition, if not learning by applying an artificial intelligence program, when there is no sensing data received for a certain time, the sensor monitoring device 140 may transmit a test signal for checking whether an operation is abnormal to the wireless control device 11, and when there is no response signal, the sensor monitoring device 140 may determine that the operation is abnormal and may take action to repair or replace the wireless control device 110 through the manager terminal device 120.

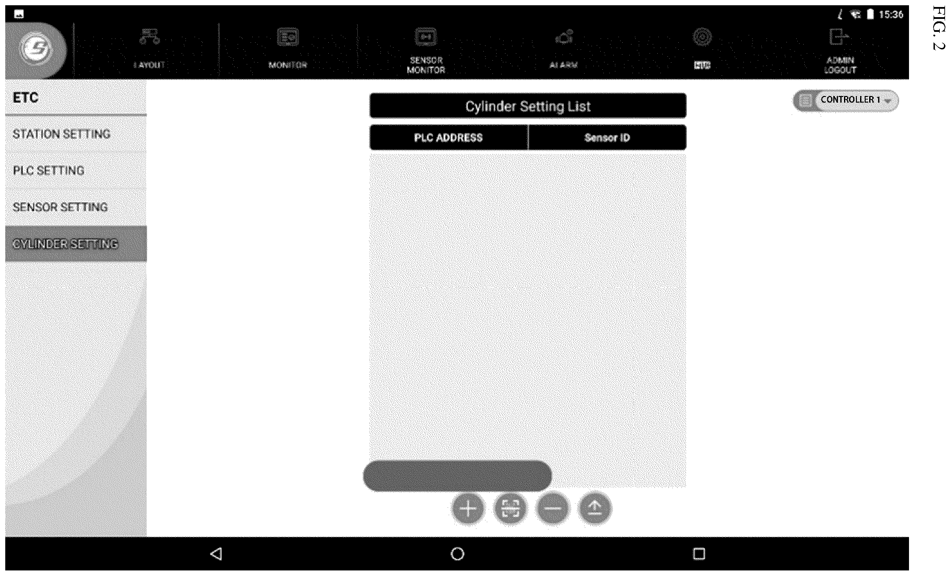

FIGS. 2 to 6 are diagrams for describing a sensor address mapping process.

For convenience of description, referring to FIGS. 2 to 6 together with FIG. 1, the manager terminal device 120 may operate as a sensor address mapping device according to an embodiment of the present invention and may first display a screen for accessing a sensor mapping setting page in a manager mode as shown in FIG. 2.

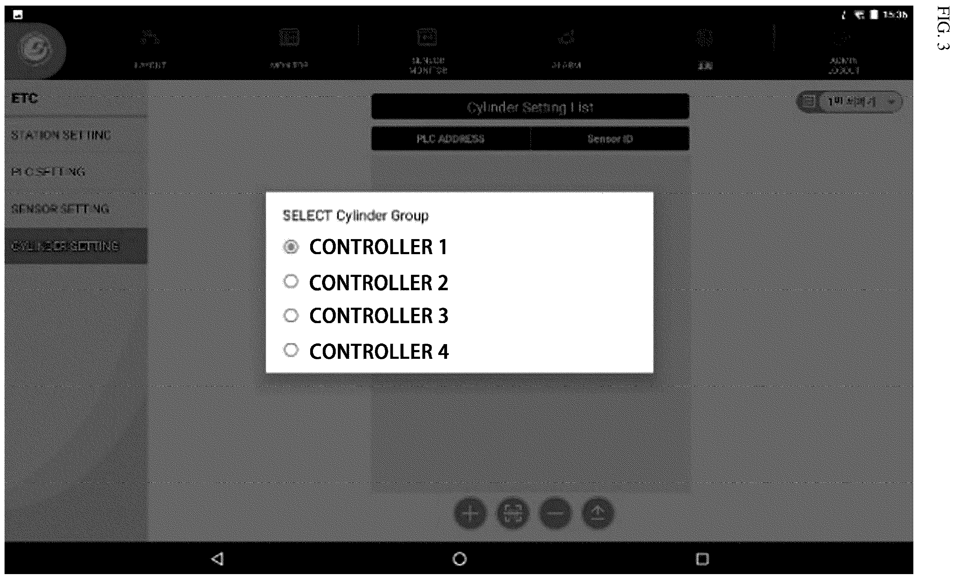

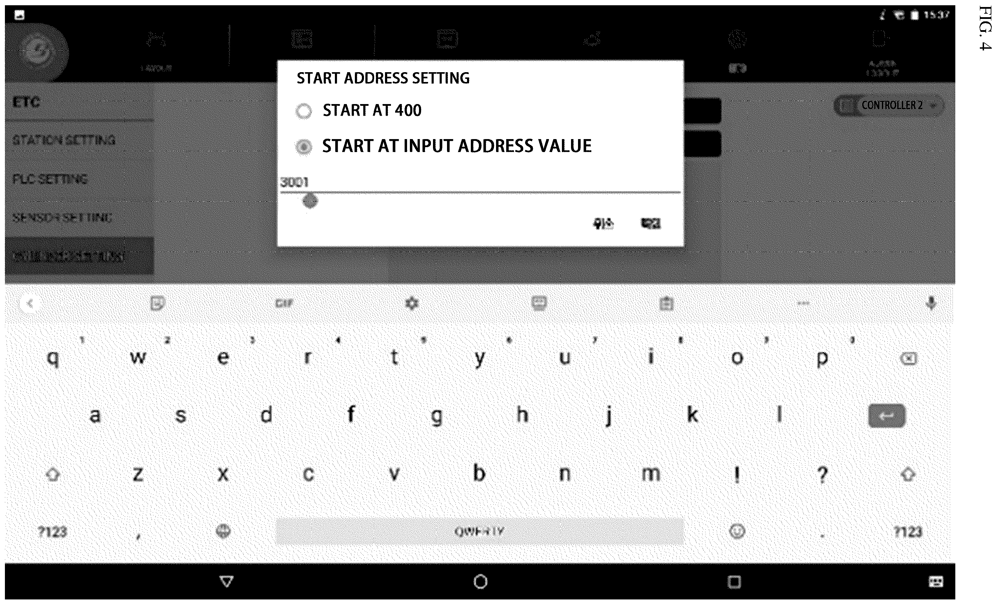

Through a corresponding setting page, a start address may be set for each controller, and sensor data may be added in such a process. For example, as shown in FIGS. 3 and 4, two setting windows may be displayed. A first setting window corresponds to a controller setting window screen. A second setting window corresponds to a start address setting window screen. It can be regarded that what wireless controllers and what wireless sensors are determined. For example, a total of 128 wireless sensors 100 may be mapped to the first wireless controller. Accordingly, in this case, in a first item, as the following address information of a sensor, a default, that is, a preset number, may be displayed on the second setting window. Since the first item is set automatically, a manager may simply select the first item to set a start address of the wireless sensors 100 connected to each controller. That is, QR code scanning may be performed. However, when the manager desires to use address information desired by the manager, the manager may select a second item for directly inputting corresponding address information such as a number on the second setting window and may map the wireless sensors 100 based on a user setting.

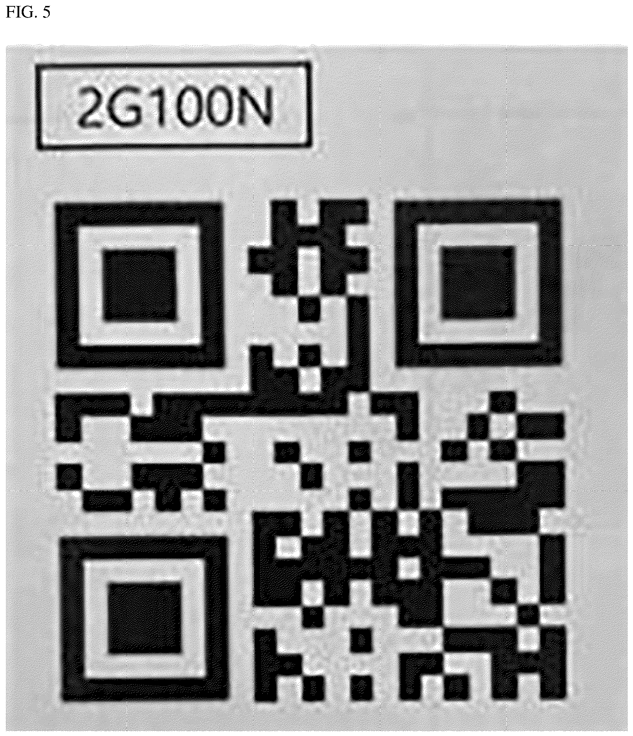

In addition, the manager terminal device 120 may select the first item or second item on the second setting window to set start address information and then may scan a QR code or tag (for example, a radio frequency identification (RFID) tag) attached to the wireless sensor 100 to store ID information of the wireless sensor 100 for each piece of address information. A corresponding QR code is shown in FIG. 5. Since the QR code includes a sensor ID value, ID information of each wireless sensor 100 is automatically mapped by recognizing the QR code through a camera of the manager terminal device 120.

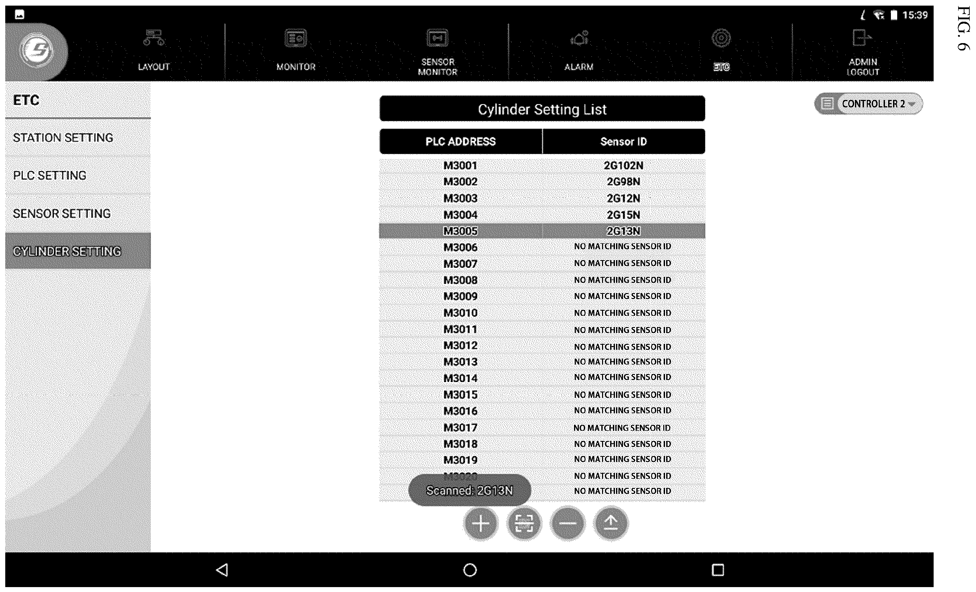

Of course, a sensor ID may be deleted according to a request of a manager of the manager terminal device 120, and when a mapping operation is completed, corresponding mapping data, that is, a sensor ID history, is transmitted to the sensor monitoring device 140 of FIG. 1 such as a programmable logic controller (PLC) and systematically classified and stored in the DB 140a. Of course, when there is a modification, the manager terminal device 120 may retrieve corresponding prestored mapping data, may modify the prestored mapping data, and then may update the prestored data in the DB 140a of FIG. 1. In addition, the manager terminal device 120 may check whether there is an error in registration by checking sensor mapping data including a sensor ID value as shown in FIG. 6. Of course, such an error may also be easily checked for each controller by selecting each controller from a controller selection item at the upper right end of FIG. 6. For example, since the manager terminal device 120 generates one screen for each controller, the manager terminal device 120 may automatically check whether there is duplicate information when data is input, thereby determining in advance whether there is duplication.

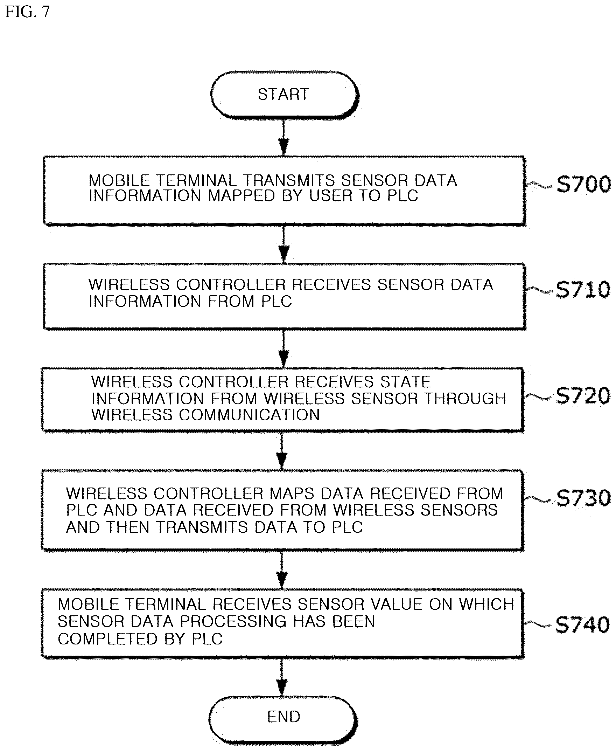

FIG. 7 is a flowchart illustrating a sensor address mapping process according to an embodiment of the present invention.

For convenience of description, referring to FIG. 7 together with FIG. 1, the manager terminal device 120 according to the embodiment of the present invention, that is, a mobile terminal, transmits sensor data information mapped by a user to the sensor monitoring device 140, that is, a PLC (S700). An operation of mapping sensor data has been described above with reference to FIGS. 2 to 6, and thus a description thereof is replaced with the above-described content.

In addition, the wireless control device 110 as a wireless controller receives sensor data information from the PLC (S710). More precisely, each wireless controller may receive sensor data information about the wireless sensors 100 related to a jurisdiction area thereof. However, since each wireless control device 110 may receive sensor data information about all wireless controllers to extract and use only sensor data information corresponding to a wireless controller thereof, the embodiment of the present invention is not particularly limited to any one form. In an embodiment of the present invention, the former method is preferable because a computational processing load may be reduced.

In this way, when a system setting or data construction operation is completed, the wireless control device 110 receives state information of a wireless controller through wireless communication with the wireless sensors 100 (S720). Here, the state information includes information about an operating state of industrial automation equipment or the like or information about an environmental state of a surrounding environment of the equipment (for example, temperature, humidity, or shock).

Then, the wireless control device 110, that is the wireless controller, maps data received from the sensor monitoring device 140 and data received from the wireless sensors 100, that is, processes the data, and then transmits the processed data to the sensor monitoring device 140, that is, the PLC (S730). It can be regarded that the wireless controller matches sensing data related to an operating state of the wireless sensors 100 for each controller and transmits the sensing data to the sensor monitoring device 140.

Afterwards, the manager terminal device 120, which is a mobile terminal, receives a sensor value on which sensor data processing has been completed by the PLC which is the sensor monitoring device 140 (S740). For example, the manager terminal device 120 may check an operating state of sensors on a screen, but may also provide a notification by determining a situation such as a remaining battery level that may cause a safety incident.

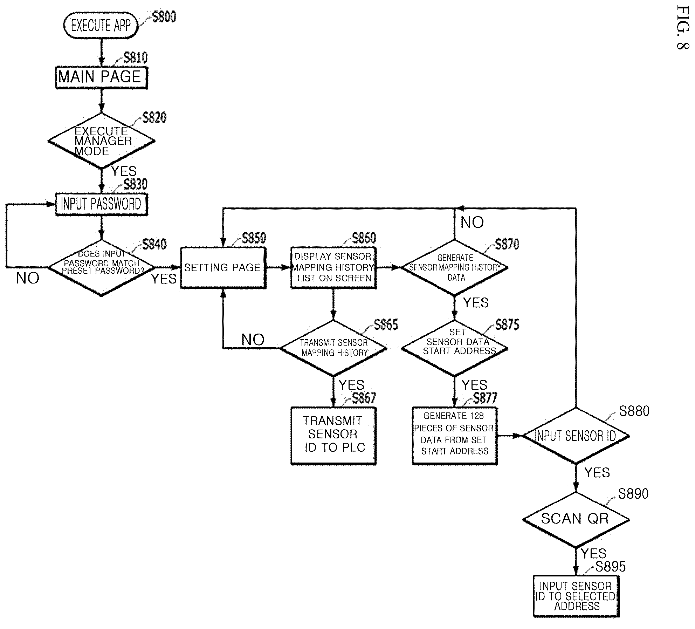

FIG. 8 is a flowchart illustrating an operation process of an address information mapping device according to an embodiment of the present invention.

For convenience of description, referring to FIG. 8 together with FIG. 1, the address information mapping device according to the embodiment of the present invention executes an application (hereinafter, "app") as the manager terminal device 120 of FIG. 1 to display a sensor mapping setting page as shown in FIG. 2 on a screen (S800 to S850). For this purpose, the manager terminal device 120 may have access in a manager mode. Of course, since such a page screen may be a screen provided by the manager terminal device 120 executing an app and accessing the sensor monitoring device 140 in a manager mode, that is, through a web address, the embodiment of the present invention is not particularly limited to any one form.

When the manager terminal device 120 has access in the manager mode, the manager terminal device 120 may request input of a password and may provide a setting page when the password matches a preset password.

In addition, the manager terminal device 120 displays a sensor mapping history list screen on the screen and transmits a sensor ID to the sensor monitoring device 140 of the PLC when a request for sensor mapping history transmission is received from a manager (S860, S865, and S867).

In such a process, when a request for generating sensor mapping history data is received from the manager, the manager terminal device 120 may perform an operation of setting a sensor data start address and may generate up to 128 pieces of sensor data from a set start address (S870, S875, and S877).

In addition, the manager terminal device 120 may input (or register) a sensor ID such that sensor data may be generated from the set start address, and in such a process, a QR code attached to a sensor may be scanned (S880 and S890).

Accordingly, the manager terminal device 120 inputs the sensor ID to a selected address (S895). For example, when a manager inputs sensor address information based on a user to match the wireless sensors 100 to a second wireless controller, in the case of a number, sensor address information may be generated in a sequentially increasing form, and thus a QR code may be scanned to input a sensor ID of a specific sensor. However, when address information is used in the form of text, the manager terminal device 120 may operate by registering sensor address information each time and then scanning a QR code to input a sensor ID. Since various methods are possible, the embodiment of the present invention will not be particularly limited to any one form.

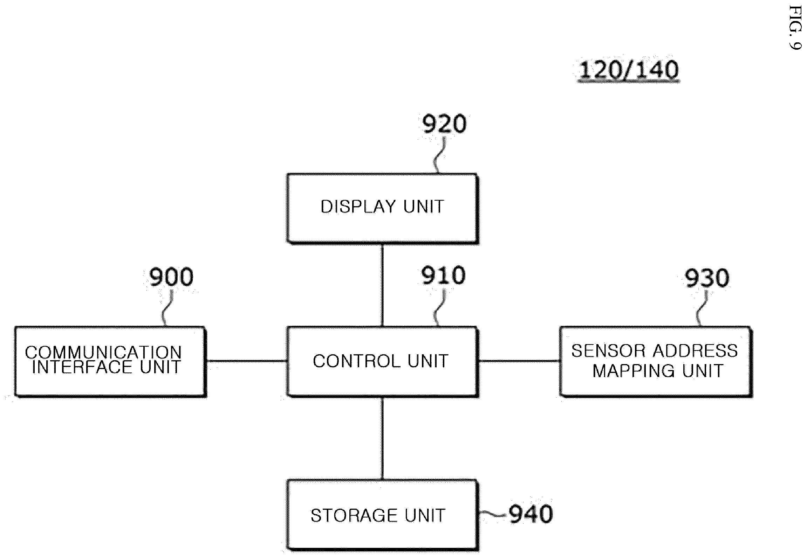

FIG. 9 is a block diagram illustrating a detailed structure of an address information mapping device according to an embodiment of the present invention.

As shown in FIG. 9, the address information mapping device according to the embodiment of the present invention is at least one device of the manager terminal device 120 and the sensor monitoring device 140 of FIG. 1 and includes some or all of a communication interface unit 900, a control unit 910, a display unit 920, a sensor address mapping unit 930, and a storage unit 940.

Here, the expression "including some or all" means that some components such as the storage unit 940 may be omitted to constitute the address information mapping device or some components such as the sensor address mapping unit 930 may be integrated into other components such as the control unit 910. In order to provide a thorough understanding of the present invention, the case in which all are included will be described. In addition, for convenience of description, the address information mapping device is described below as the manager terminal device 120.

The communication interface unit 900 communicates with the sensor monitoring device 140 through the communication network 130 of FIG. 1. In a process of performing communication, the communication interface unit 900 may download and store an app for an address information mapping operation. The app may also be referred to as "a controller sensor address mapping program according to user address setting" according to embodiments of the present invention.

In addition, when an automatic address mapping operation between the wireless controller and the wireless sensor 100 is completed according to a process as shown in FIGS. 2 to 6, the communication interface unit 900 transmits mapping sensor data to the sensor monitoring device 140 of FIG. 1 according to a request of the control unit 910. Accordingly, the sensor monitoring device 140 may systematically classify and store corresponding data information in the DB 140a and may perform an update operation when there is prestored data information.

In addition, the communication interface unit 900 receives a sensor value provided by the sensor monitoring device 140 of FIG. 1 according to a user address setting. Of course, the sensor value here is related to an operating state or the like of the wireless sensors 100. The sensor value may be displayed on the display unit 920 of FIG. 1 under the control of the control unit 910.

The control unit 910 performs overall control operations of the communication interface unit 900, the display unit 920, the sensor address mapping unit 930, and the storage unit 940 of FIG. 9. The control unit 910 may control the sensor address mapping unit 930 according to a request of a manager to execute a program installed therein, and thus the screens of FIGS. 2 to 6 may be implemented on the display unit 920. In addition, the control unit 910 controls the communication interface unit 900 such that, when a user setting operation is completed through the display unit 920, sensor data information generated upon the completion is transmitted to the sensor monitoring device 140 of FIG. 1.

The display unit 920 displays various types of setting screens or data on the screen under the control of the control unit 910. Typically, the display unit 920 may display the screens as shown in FIGS. 2 to 6 under the control of the control unit 910, and when a sensor value is provided from any wireless sensor 100 according to sensor data information set through the screens, the display unit 920 may display the sensor value.

The sensor address mapping unit 930 performs a setting operation with the wireless control device 110, which is a wireless controller that controls (or communicates with) wireless sensors 100, according to a request of a user. For this purpose, various types of UX/UI screens may be generated and provided, and of course, these screens may be generated in advance. Typically, the sensor address mapping unit 930 may provide a first setting window for setting a wireless controller and then may provide a second setting window for matching the wireless sensors 100 to the wireless controller set on the first setting window. Of course, corresponding setting windows are displayed on the display unit 920.

The sensor address mapping unit 930 also matches sensor ID values of the wireless sensors 100 based on address information set by a manager through the second setting window. Accordingly, mapping is performed in the form of wireless controller-wireless sensor address information-sensor ID value. Of course, the wireless sensor address information here may be set in the form of a number or text. An operation is performed by a user directly inputting a number or text. In addition, sensor ID value matching is automatically performed by inputting sensor address information and then scanning a QR code of a sensor. Here, the term "matching" may refer to a process of connecting each wireless sensor 100 to the wireless controller, and the term "mapping" may refer to the overall connection state formed by the connecting. It may be regarded as meaning a form similar to a map, and therefore, in the embodiment of the present invention, it may be referred to as sensor mapping data. Therefore, the sensor address mapping unit 930 matches sensor values of the plurality of wireless sensors 100 matched to each wireless controller to generate sensor address mapping data. Therefore, the embodiment of the present invention is not specifically limited to the use of such terms.

The storage unit 940 temporarily stores and then outputs various types of data processed under the control of the control unit 910. The storage unit 940 may temporarily store information input through various setting windows in the display unit 920 and then may operate to provide the information to the sensor address mapping unit 930.

In addition to the above-described content, the communication interface unit 900, the control unit 910, the display unit 920, the sensor address mapping unit 930, and the storage unit 940 of FIG. 9 may perform various operations, and since other detailed content has been sufficiently described above, description thereof is replaced with the above-described content.

The communication interface unit 900, the control unit 910, the sensor address mapping unit 930, and the storage unit 940 of FIG. 9 according to the embodiment of the present invention are formed of hardware modules that are physically separated from each other, but each module may store software for performing the operations therein and execute the same. However, the corresponding software may be a set of software modules, each of which may be formed of hardware, and thus may not be particularly limited to a configuration such as software or hardware. For example, the storage unit 940 may be a storage or a memory that is hardware. However, the storage unit 940 may reposit information in terms of software, and thus the present invention is not particularly limited to the above-described content.

Meanwhile, as another embodiment of the present invention, the control unit 910 may include a CPU and a memory and may be formed as a single chip. The CPU may include a control circuit, an arithmetic unit (ALU), an instruction interpretation unit, and a registry, and the memory may include a random access memory (RAM). The control circuit may perform control operations, the ALU may perform an operation of calculating binary bit information, the instruction interpretation unit may include an interpreter and a compiler to perform an operation of converting high-level language into machine language or converting machine language into high-level language, and the registry may be involved in software data storage. According to such a configuration, a data calculation processing speed may be rapidly increased by copying a program stored in the sensor address mapping unit 930 at the initial operation of the manager terminal device 120, loading the program into the memory, that is, the RAM, and then executing the program. In the case of deep learning models, the program may be loaded onto a graphic processor unit (GPU) memory instead of a RAM and executed by accelerating execution speed using a GPU.

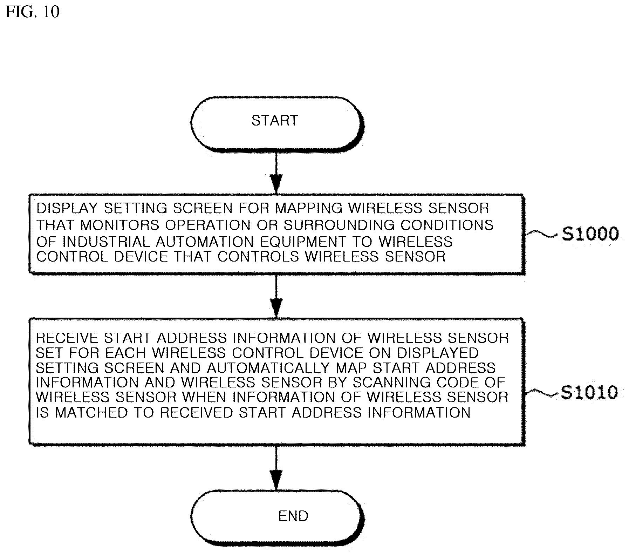

FIG. 10 is a flowchart illustrating a process of driving the sensor address mapping device of FIG. 9.

For convenience of description, referring to FIG. 10 together with FIG. 1, in an embodiment of the present invention, the manager terminal device 120 serves as a sensor address mapping device to display a setting screen for mapping the wireless sensor 100 that monitors the operation or surrounding conditions of industrial automation equipment, that is, industrial equipment, to the wireless control device 110 that controls the wireless sensor 100 (S1000).

For example, wireless sensors 1 to 128 may be matched to a first wireless controller to generate data. In addition, wireless sensors 129 to 257 may be matched to a second wireless controller to generate data. Of course, here, the number is shown as an example, but since the number may also be directly designated by a manager of the manager terminal device 120, the embodiment of the present invention is not particularly limited to any one form.

In addition, the manager terminal device 120 receives start address information of the wireless sensor 100 set for each wireless control device 110 on the displayed setting screen and automatically maps the start address information and the wireless sensor 100 by scanning a code of the wireless sensor 100 when ID information of the wireless sensor 100 is matched to the received start address information (S1010). According to such a process, data may be linked and generated in the form of, for example, wireless controller-wireless sensor address information-wireless sensor ID information, and when the address information is input by the manager, automatic registration is possible for the plurality of wireless sensors 100 by scanning a QR code later. Thus, a construction operation of the wireless sensor 100 may be quickly performed.

In addition to the above-described content, the manager terminal device 120 of FIG. 10 may perform various operations, and since other detailed contents have been sufficiently described above, a description thereof is replaced with the above-described content.

Although all elements constituting the embodiments of the present invention are described as being combined into one or combined to operate, the present invention is not necessarily limited to the embodiments. That is, within the objective scope of the present invention, the respective components may be selectively and operatively combined as one or more components. In addition, each component may be embodied as one independent piece of hardware. However, some or all of the components may be selectively combined to be embodied as a computer program having a program module performing some or all functions combined in one or more pieces of hardware. Codes and code segments configuring the computer program may be easily inferred by those skilled in the art. The computer program may be stored on a non-transitory computer readable medium, and read and executed by a computer to embody embodiments of the present invention.

Here, the non-transitory computer readable medium is a medium which does not store data temporarily such as a register, cash, and memory but stores data semi-permanently and is readable by devices. Specifically, the above-described programs may be stored in a non-transitory computer readable medium such as compact disks (CDs), digital video disks (DVDs), hard disks, Blu-ray disks, universal serial buses (USBs), memory cards, and read-only memories (ROMs).

Although exemplary embodiments of the present invention have been shown and described, the present invention is not limited to the above-described specific embodiments, but it should be understood by those skilled in the art that various modifications and variations are possible without departing from the subject matter of the present invention claimed by the accompanying claims. In addition, the modifications and variations should not be understood based on the technical spirit or prospects of the disclosure.

## Claims

1. A sensor address mapping device comprising:
a display unit (920) which displays a setting screen for mapping a wireless sensor (100) configured to monitor an operation or a surrounding condition of industrial equipment to a wireless control device (110) configured to control the wireless sensor (100); and
a control unit (910) which receives start address information of the wireless sensor (100) set for each wireless control device (110) on the displayed setting screen and automatically maps the start address information and the wireless sensor (100) by scanning a code of the wireless sensor (100) when identification information of the wireless sensor (100) is matched to the received start address information.

2. The sensor address mapping device of claim 1, wherein the control unit (910) displays a first setting window for setting the wireless control device (110) on the display unit (920) and displays a second setting window for setting a start address of the wireless sensor (100) matched to the wireless control device (110) selected on the first setting window.

3. The sensor address mapping device of claim 2, wherein the control unit (910) displays a first item in which a number of a start address is preset when the second setting window is displayed on the display unit (920), and a second item that allows an address to start with information desired by a user.

4. The sensor address mapping device of claim 3, wherein the control unit (910) operates to allow the user to directly input a number or text of a start address in the second item.

5. The sensor address mapping device of claim 1, wherein the control unit (910) provides automatically mapped mapping data to an external device configured to remotely monitor the wireless sensor (100) so that monitoring is performed based on the provided mapping data.

6. The sensor address mapping device of claim 1, wherein the sensor address mapping device includes a mobile-based terminal device (120) including a smartphone or a tablet personal computer (PC).

7. A method of driving a sensor address mapping device, the method comprising:
displaying, by a display unit (920), a setting screen for mapping a wireless sensor (100) configured to monitor an operation or a surrounding condition of industrial equipment to a wireless control device (110) configured to control the wireless sensor (100); and
receiving, by a control unit (910), start address information of the wireless sensor (100) set for each wireless control device (110) on the displayed setting screen and automatically mapping the start address information and the wireless sensor (100) by scanning a code of the wireless sensor (100) when identification information of the wireless sensor (100) is matched to the received start address information.
